# EUROPÄISCHE PATENTSCHRIFT

(11) **EP 2 625 386 B1**
(45) Veröffentlichungstag und Bekanntmachung des Hinweises auf die Patenterteilung: **17.06.2015**
(21) Anmeldenummer: 11764773.5
(22) Anmeldetag: 07.10.2011
(51) Int. Cl.: F01C 3/08

(54) **PUMPE, VERDICHTER ODER MOTOR MEHRSTUFIG ODER MEHRFLUTIG**
PUMP, COMPRESSOR OR MOTOR, MULTI-STAGE OR MULTI-CHANNEL
POMPE, COMPRESSEUR OU MOTEUR À ÉTAGES MULTIPLES OU À FLUX MULTIPLES

(30) Priorität: 20.12.2010 DE 102010063517; 08.10.2010 DE 102010042176
(43) Veröffentlichungstag der Anmeldung: 14.08.2013
(73) Patentinhaber: Robert Bosch GmbH, 70442 Stuttgart (DE)
(72) Erfinder: KUNATH, Sando, 70190 Stuttgart (DE); AMESOEDER, Dieter, 74321 Bietigheim-Bissingen (DE); SKRYNSKI, Evgenij, 71229 Leonberg (DE)
(86) Internationale Anmeldenummer: PCT/EP2011/067542
(87) Internationale Veröffentlichungsnummer: WO 2012/045856

(56) Entgegenhaltungen:
- WO-A1-93/12325
- WO-A1-2008/110155

## Beschreibung

### Stand der Technik

Die vorliegende Erfindung betrifft eine Drehkolbenmaschine, die als Pumpe, Verdichter oder Motor arbeitet, mit einem Rotor und einem Stator.

Aus der DE 42 41 320 A1 ist eine Drehkolbenmaschine bekannt, die als Pumpe, Verdichter oder Motor arbeitet. Bei dieser laufen Kämme von Zähnen eines rotierenden Antriebsteils zur Begrenzung von Arbeitsräumen auf einer zykloiden Fläche eines ebenfalls verzahnten Abtriebteils und treiben dabei dieses Abtriebsteil an. Zwischen den Zähnen von Abtriebsteil und Antriebsteil werden die genannten Arbeitsräume gebildet, die während des Rotierens der Teile für ihre Arbeit vergrößert bzw. verkleinert werden, um die Förderwirkung auf ein gasförmiges oder flüssiges Medium zu erzeugen. Um den Durchsatz eines zu verdichtenden Mediums zu erhöhen, schlägt die DE 42 41 320 A1 vor, zwischen dem Abtriebsteil und dem Antriebsteil ein Steuerteil derart anzuordnen, dass zwischen dem Steuerteil und dem Antriebsteil erste Arbeitsräume und zwischen dem Abtriebsteil und dem Steuerteil zweite Arbeitsräume ausgebildet werden, die einander gegenüberliegen.

Die DE 10 2008 013991 A1, die auch unter WO 2008/110155 A1 veröffentlicht ist, schlägt vor, in einem Gehäuse einen Rotor und einen Stator vorzusehen, wobei zwischen einer Antriebswelle und dem Rotor eine schiefe Gleitebene angeordnet ist. Diese schiefe Gleitebene führt bei einem Rotieren der Welle zu einem Taumeln des Rotors bzw. ein Taumeln des Rotors zu einem Rotieren der Welle. Hierbei ist der dem Rotor gegenüberliegende Stator nicht mitrotierend und somit ortsfest in einem den Rotor und den Stator aufnehmenden Gehäuse angeordnet.

### Zusammenfassung der Erfindung

Es kann ein Bedürfnis bestehen, auch bei einer kompakten Gestaltung des Gehäuses die Förderwirkung und/oder den zu erreichenden Druck auf ein gasförmiges oder flüssiges Medium zu erhöhen.

Dieses Bedürfnis kann durch einen Gegenstand des unabhängigen Anspruchs gelöst werden. Vorteilhafte Ausgestaltungen sind in den abhängigen Ansprüchen angegeben.

Eine Drehkolbenmaschine, die als Pumpe, Verdichter oder Motor arbeitet, weist einen Rotor und einen Stator auf, wobei der Stator dem Rotor gegenüberliegend angeordnet ist. Der Rotor weist eine erste Stirnfläche mit einer ersten Verzahnung auf und der Stator weist eine zweite Stirnfläche mit einer zweiten Verzahnung auf. Die erste und die zweite Verzahnung sind je aus zumindest einem Zahn und einer Zahnlücke gebildet. Der Stator ist gegenüber dem Rotor ortsfest angeordnet. Die Verzahnungen des Rotors und des Stators stehen miteinander derart in Eingriff, dass durch ein Kämmen der Zähne der ersten Verzahnung und der Zähne der zweiten Verzahnung erste Arbeitsräume ausgebildet werden, wobei durch die ersten Arbeitsräume gebildete Volumina durch das Kämmen der Zähne verändert werden. Der Rotor weist eine erste Drehachse auf. Der Stator weist eine erste Mittelachse auf. Die erste Drehachse und die erste Mittelachse schließen einen Winkel ein, der ungleich 0° ist. Der Rotor ist durch eine Antriebswelle mit einer Gleitebene angetrieben, wobei die Gleitebene senkrecht auf die erste Drehachse steht, so dass ein Rotieren der Antriebswelle zu einem Taumeln des Rotors gegenüber dem Stator bzw. ein Taumeln des Rotors zu einem Drehen der Antriebswelle führt. Die erste Stirnfläche des Rotors weist eine von der ersten Verzahnung räumlich getrennte dritte Verzahnung auf. Die zweite Stirnfläche des Stators weist eine von der zweiten Verzahnung räumlich getrennte vierte Verzahnung auf. Die dritte und die vierte Verzahnung sind je mindestens aus einem Zahn und einer Zahnlücke gebildet, wobei die dritte und die vierte Verzahnung miteinander derart in Eingriff stehen, dass durch ein Kämmen der Zähne der dritten Verzahnung und der Zähne der vierten Verzahnung wenigstens ein zweiter Arbeitsraum ausgebildet wird, wobei durch den wenigstens einen zweiten Arbeitsraum gebildetes Volumen durch das Kämmen der Zähne verändert wird.

Somit werden also zwischen dem Rotor und dem Stator zwei voneinander unabhängige Arbeitsräume gebildet. Somit kann also ein zu transportierendes gasförmiges oder flüssiges Medium sowohl dem wenigstens einen ersten als auch dem wenigstens einen zweiten Arbeitsraum zugeführt werden. Auch muss die Teilung der Verzahnung der ersten Verzahnung und der dritten Verzahnung nicht gleich sein. Es können also bei der ersten Verzahnung mehr Zähne als bei der dritten Verzahnung vorhanden sein. Die erste Verzahnung weist bezüglich der dritten Verzahnung und die zweite Verzahnung bezüglich der vierten Verzahnung jeweils einen Zahn Unterschied auf. In dem hier vorliegenden Beispiel weist jeweils die zweite bzw. die vierte Verzahnung einen Zahn weniger auf als die erste bzw. dritte Verzahnung. Durch die Verwendung von nur einem Rotor in Verbindung mit dem Stator kann das Gehäuse kompakt gestaltet sein.

Die räumliche Trennung der ersten Verzahnung von der dritten Verzahnung sowie der zweiten Verzahnung von der vierten Verzahnung bewirkt, dass ein Druckausgleich zwischen dem mit einem ersten Druck beaufschlagten wenigstens einen ersten Arbeitsraum und dem mit einem zweiten Druck beaufschlagten wenigstens einen zweiten Arbeitsraum nicht erfolgt, wobei der erste Druck von dem zweiten Druck unterschiedlich sein kann. Eine Verbindung der ersten und zweiten Arbeitsräume findet, wenn überhaupt, nur statt, wenn das mittels der ersten Arbeitsräume verdichtete Medium den zweiten Arbeitsräumen zum weiteren Verdichten gewollt zugeführt wird.

In einem weiteren Ausführungsbeispiel der Erfindung sind bei einer Drehkolbenmaschine quer zur ersten Stirnfläche des Rotors gesehen die erste Verzahnung und die dritte Verzahnung durch eine erste Stufe beabstandet. Quer zur zweiten Stirnfläche des Gegenrotors gesehen sind die zweite Verzahnung und die vierte Verzahnung durch eine zweite Stufe beabstandet. Ferner sind die erste und die zweite Stufe derart gestaltet, dass der wenigstens eine erste Arbeitsraum und der wenigstens eine zweite Arbeitsraum derart voneinander räumlich getrennt sind, dass die Drehkolbenmaschine mehrstufig oder mehrflutig betreibbar ist.

Durch die Trennung des wenigstens einen ersten Arbeitsraums von dem wenigstens einen zweiten Arbeitsraum mittels der Stufe ist es möglich, ein zu transportierendes Medium entweder mehrstufig oder mehrflutig zu befördern. Ein mehrflutiger Betrieb bedeutet, dass das zu transportierende Medium in einen ersten Volumenstrom und einen zweiten Volumenstrom aufgespalten wird, wobei der erste Volumenstrom dem wenigsten einen ersten Arbeitsraum und der zweite Volumenstrom dem wenigsten einen zweiten Arbeitsraum zugeführt wird. In der Regel werden diese beiden Volumenströme nach Erreichen der maximalen Druckerhöhung durch die Drehkolbenmaschine am Austritt wieder zusammengeführt. Ein mehrstufiger Betrieb bedeutet, dass ein Volumenstrom des zu transportierenden Mediums dem wenigsten einen ersten Arbeitsraum zugeführt wird, durch den der Druck des Mediums erhöht wird. Anschließend wird dieses vorverdichtete Medium dem wenigsten einen zweiten Arbeitsraum zugeführt, der den Druck des zu transportierenden Mediums nochmals erhöht. Somit kann die mittels dem wenigsten einen ersten Arbeitsraum erfolgte Druckerhöhung als erste Stufe und die mittels dem wenigsten einen zweiten Arbeitsraum erfolgte weitere Druckerhöhung als zweite Stufe angesehen werden. Die den wenigsten einen ersten Arbeitsraum von dem wenigsten einen zweiten Arbeitsraum trennende Stufe verhindert, dass sich ein in dem wenigsten einen ersten Arbeitsraum befindendes Medium mit einem sich in dem wenigsten einen zweiten Arbeitsraum befindenden Medium austauscht. Die erste Verzahnung kann als eine Außenring und die dritte Verzahnung kann als ein Innenring ausgebildet sein, wobei der Innenring und der Außenring konzentrisch um die Drehachse angeordnet sind. Ein Außendurchmesser des Innenrings ist hierbei gleich oder kleiner als ein Innendurchmesser der Außenverzahnung. Ebenso kann die zweite und die vierte Verzahnung des Stators ausgebildet sein.

In einem weiteren Ausführungsbeispiel der Erfindung weist der Stator eine kugelringförmige Innenwandung auf. Der Rotor weist eine kugelringförmige Außenkontur auf. Die kugelringförmige Innenwandung ist komplementär zu der kugelringförmigen Außenkontur ausgebildet, derart, dass der Rotor in dem Stator drehbar geführt ist. Die erste und die zweite Stufe sind kugelringförmig ausgeformt. Der Rotor weist symmetrisch zu seiner Drehachse eine Kugelkappe auf. Der Stator weist symmetrisch zu seiner ersten Mittelachse eine zu der Kugelkappe komplementär ausgeformte kugelförmige Stützfläche auf. Ein erster Mittelpunkt der kugelringförmigen Außenkontur, ein zweiter Mittelpunkt der kugelringförmigen Innenwandung, einer dritter Mittelpunkt der ersten Stufe, ein vierter Mittelpunkt der zweiten Stufe, ein fünfter Mittelpunkt der Kugelkappe und ein sechster Mittelpunkt der kugelförmigen Stützfläche fallen zu einem gemeinsamen Mittelpunkt zusammen, in dem sich die erste Mittelachse und die erste Drehachse kreuzen.

Ferner kreuzen sich in dem gemeinsamen Mittelpunkt erste Verlängerungen von ersten Mantellinien der ersten Verzahnung, zweite Verlängerungen von zweiten Mantellinien der zweiten Verzahnung, dritte Verlängerungen von dritten Mantellinien der dritten Verzahnung und vierte Verlängerungen von vierten Mantellinien der vierten Verzahnung.

Durch eine derartige Konfiguration ist es möglich, sowohl bezogen auf eine Anzahl der Zähne als auch eine Höhe der Zähne den Rotor gegenüber dem Stator um den gemeinsamen Mittelpunkt derart zu neigen, dass die Drehkolbenmaschine einen optimalen Wirkungsgrad erreicht. Zusätzlich kann die Stator-Rotor-Antriebswelle-Anordnung derart gestaltet sein, dass eine zweite Drehachse der Antriebswelle mit der ersten Mittelachse des Stators zusammenfällt. Da der Rotor in dem Stator gelagert ist, kann der Stator an seiner Außenwandung einfach gestaltet sein, wie beispielsweise als ein gerader Kreiszylinder. Entsprechend einfach kann auch eine Gehäuseinnenwandung eines Gehäuses gestaltet sein, welches die Stator-Rotor-Antriebswelle-Anordnung aufnimmt. Beispielsweise kann die Gehäuseinnenwandung im Bereich des Stators ebenfalls kreiszylindrisch geformt sein. Die kugelringförmige Innenwandung des Stators kann derart gestaltet sein, dass die kugelringförmige Außenkontur des Rotors an der Innenwandung des Gegenrotors schleift oder von dieser vorbestimmt beabstandet ist.

Der erste Arbeitsraum kann durch die ersten und zweiten Zähne sowie durch die kugelförmige Innenwandung des Gegenrotors und die erste Stufe des Rotors begrenzt sein. Der zweite Arbeitsraum kann durch die dritten und vierten Zähne sowie durch die Kugelkappe des Rotors und die zweite Stufe des Gegenrotors begrenzt sein.

In einem weiteren Ausführungsbeispiel der Erfindung weist die Antriebswelle ein Antriebsteil auf, wobei eine dem Rotor zugewandte dritte Stirnfläche des Antriebsteils als die Gleitfläche ausgebildet ist. Die Gleitfläche weist wenigstens eine erste Eintrittssteueröffnung und/oder eine erste Austrittssteueröffnung auf, wobei ein zu verdichtendes Fluid mittels der wenigstens einen ersten Eintrittssteueröffnung dem wenigstens einen ersten Arbeitsraum und/oder dem wenigstens einen zweiten Arbeitsraum zuführbar und/oder ein verdichtetes Fluid mittels der wenigstens einen ersten Austrittsöffnung aus dem wenigstens einen ersten Arbeitsraum und/oder aus dem wenigstens einen zweiten Arbeitsraum abführbar ist.

Somit kann durch eine gezielte Anordnung der Eintritts- und/oder Austrittssteueröffnung beispielsweise das zu verdichtende Fluid in einen ersten und einen zweiten Volumenstrom aufgeteilt werden, so dass der erste Volumenstrom den ersten Arbeitsräumen und der zweite Volumenstrom den zweiten Arbeitsräumen zugeführt werden kann. Mittels der Austrittsöffnungen kann dann der verdichtete erste Volumenstrom den ersten Arbeitsräumen und der zweite Volumenstrom den zweiten Arbeitsräumen entnommen werden, ohne dass sich beide Volumenströme miteinander mischen. Auch kann die Eintrittssteueröffnung und die Austrittssteueröffnung so ausgebildet sein, dass ein zu verdichtendes Fluid zuerst den ersten Arbeitsräumen zugeführt, diesen nach einem ersten Verdichtungsvorgang entnommen, anschließend den zweiten Arbeitsräumen zum weiteren Verdichten zugeführt und abschließend den zweiten Arbeitsräumen in endverdichtetem Zustand entnommen wird.

In einem weiteren Ausführungsbeispiel der Erfindung weist der Rotor der Antriebsmaschine eine der Gleitfläche zugewandte vierte Stirnfläche auf. Die vierte Stirnfläche weist wenigstens eine erste und wenigstens eine zweite Steueröffnung auf, wobei die wenigstens eine erste Steueröffnung mit dem wenigstens einen ersten Arbeitsraum und die wenigstens eine zweite Steueröffnung mit dem wenigstens einen zweiten Arbeitsraum fluidkommunizierend verbunden ist.

In der Regel ist die wenigstens eine erste und die wenigstens eine zweite Steueröffnung mit einer Öffnung in der Zahnlücke fluidkommunizierend verbunden. Jedoch kann diese Öffnung auch in einer Zahnflanke angeordnet sein. In dem hier vorliegenden Beispiel ist in jeder der Zahnlücken, sowohl der ersten als auch der dritten Verzahnung eine derartige Öffnung vorgesehen, die jeweils mit der entsprechenden Steueröffnung verbunden ist. In dem hier vorliegenden Beispiel ergeben sich zehn erste Steueröffnungen für die erste Verzahnung und zehn zweite Steueröffnungen für die dritte Verzahnung. Es sei an dieser Stelle angemerkt, dass die Steueröffnungen in Abhängigkeit eines Drehwinkels der Antriebswelle entweder als Eintrittssteueröffnungen oder als Austrittssteueröffnungen fungieren. Weiterhin sei angemerkt, dass sich die Antriebswelle relativ zum Rotor dreht. Da hier der Rotor zehn Zähne aufweist, dreht sich die Antriebswelle zehn Mal um ihre zweite Drehachse, bis dass sich der Rotor einmal um seine erste Drehachse gedreht hat.

Auch kann die vierte Stirnfläche plan ausgeführt sein, wobei die ersten und zweiten Steueröffnungen beispielsweise als rechteckige Durchbrüche ausgebildet sein können.

In einem weiteren Ausführungsbeispiel der Erfindung ist aus dem wenigstens einen ersten Arbeitsraum ein erster Volumenstrom und aus dem wenigstens einen zweiten Arbeitsraum ein von dem ersten Volumenstrom unterschiedlicher zweiter Volumenstrom abführbar. Das Antriebsteil weist eine Außenwandung mit wenigstens einer dritten und einer vierten Steueröffnung auf, wobei mittels der dritten Steueröffnung der erste Volumenstrom und mittels der vierten Steueröffnung der zweite Volumenstrom einem die Außenwandung umschließenden Steuerring zuführbar ist. Durch den Steuerring ist wenigstens eine der Steueröffnungen aus der Gruppe der dritten und vierten Steueröffnung fluiddicht verschließbar.

Diese Ausführungsform wird in der Regel bei einem mehrflutigen Betrieb Anwendung finden. Somit kann die Gleitfläche neben der ersten Austrittssteueröffnung eine zweite Austrittssteueröffnung aufweisen, von denen die erste Austrittsteueröffnung mittels eines in dem Antriebsteil innenliegenden ersten Kanals mit der dritten Steueröffnung und die zweite Austrittsteueröffnung mittels eines zweiten in dem Antriebsteil innenliegenden zweiten Kanals mit der vierten Steueröffnung fluidkommunizierend verbunden sein kann. Hierbei ist in der Regel der erste innenliegende Kanal von dem zweiten innenliegenden Kanal fluiddicht getrennt. Der Steuerring kann derart gestaltet sein, dass entweder kein Volumenstrom oder nur der erste Volumenstrom oder nur der zweite Volumenstrom oder der erste und der zweite Volumenstrom zusammen die Drehkolbenmaschine verlassen können. Insbesondere wenn die Antriebswelle mit konstanter Drehzahl betrieben wird, ist es möglich, dass die Drehkolbenmaschine drei unterschiedlich gestufte Volumenströme verlassen können. Der erste Volumenstrom kann sich von dem zweiten Volumenstrom beispielsweise durch ein pro Zeiteinheit zu beförderndes Volumen oder durch den jeweils erreichten Enddruck unterscheiden.

In einem weiteren Ausführungsbeispiel der Erfindung sind die dritte und die vierte Steueröffnung je als Ringnut in dem Antriebsteil ausgebildet.

Somit können im Bereich der jeweiligen Ringnut an beliebiger Position der erste und/oder zweite Volumenstrom abgegriffen werden.

In einem weiteren Ausführungsbeispiel der Erfindung ist zwischen dem Steuerring und der Außenwandung des Antriebsteils ein Gleitlager mit einer ersten und einer zweiten Durchtrittsöffnung angeordnet. Die erste Durchtrittsöffnung ist mit der dritten Steueröffnung und die zweite Durchtrittsöffnung ist mit der vierten Steueröffnung fluidkommunizierend verbunden. Der Steuerring weist an vorbestimmten Positionen eine dritte und eine vierte Durchtrittsöffnung auf, wobei die dritte Durchtrittsöffnung mit der ersten Durchtrittsöffnung und die vierte Durchtrittsöffnung mit der zweiten Durchtrittsöffnung fluidkommunizierend verbunden ist.

In dieser Ausgestaltung wird die Antriebswelle im Bereich des Antriebsteil radial mittels des einem Hohlzylinder mit kreisringförmigem Querschnitt gleichenden Gleitlager gelagert, wobei sich das Gleitlager am Gehäuse abstützt. Bei der ersten und der zweiten Durchtrittsöffnung kann es sich jeweils um eine Bohrung handeln. Diese Bohrung kann senkrecht zu einer zweiten Mittelachse des Gleitlagers angeordnet sein. Das Gleitlager weist ferner eine Außenwandung auf. Der Steuerring kann als ein kreiszylindrischer Hohlkörper mit kreisringförmigem Querschnitt mit einer Innenwandung ausgebildet sein, wobei die Innenwandung des Steuerrings die Außenwandung des Gleitlagers berühren oder von dieser vorbestimmt beabstandet sein kann.

In einem weiteren Ausführungsbeispiel der Erfindung ist mittels des Steuerrings der an der dritten und/oder vierten verschlossenen Durchtrittsöffnung anstehende erste und/oder zweite Volumenstrom dem zu verdichtenden Fluid zuführbar.

Wenn beispielsweise die dritte Durchtrittsöffnung verschlossen ist und der erste Volumenstrom nicht dem zu verdichtenden Fluid zuführbar wäre, würde die Rotor-Stator-Kombination versuchen, mittels des wenigstens einen sich öffnenden Arbeitsraumes zu verdichtendes Fluid anzusaugen, um dieses mittels des wenigstens einen sich schließenden ersten Arbeitsraumes dem bereits an der dritten verschlossenen Durchtrittsöffnung anstehenden ersten verdichteten Volumenstrom zuzuführen. Da jedoch in dem Volumen zwischen der dritten Durchtrittsöffnung und der wenigstens einen ersten Steueröffnung der Enddruck erreicht ist, kann das sich im wenigstens einen ersten Arbeitsraum befindliche Fluid den ersten Arbeitsraum nicht mehr verlassen und kann einen Druck gegenüber der Rotor-Stator-Kombination aufbauen, der im Wesentlichen dem Enddruck des eingeschlossenen Volumens entsprechen kann. Dies kann sich negativ auf den Wirkungsgrad der Drehkolbenmaschine auswirken, da nun möglicherweise zum Verdichten des lediglich zweiten Volumenstromes ein höheres Drehmoment aufgewendet werden müsste, um den in der Rotor-Stator-Kombination anstehenden Gegendruck zu überwinden.

In einem weiteren Ausführungsbeispiel der Erfindung können der Rotor und der Stator weitere voneinander räumlich getrennte Verzahnungen aufweisen. Somit werden neben dem wenigstens einen und dem wenigstens zweiten Arbeitsraum noch wenigstens ein weiterer Arbeitsraum ausgebildet.

In einem weiteren Ausführungsbeispiel der Erfindung sind der Rotor und der Stator einteilig ausgeführt.

In einem weiteren Ausführungsbeispiel der Erfindung sind der Rotor und/oder Stator mehrteilig ausgeführt.

In einem weiteren Ausführungsbeispiel der Erfindung weist das Antriebsteil einen innenliegenden Mittenraum auf, der derart eingerichtet ist, insbesondere bei mehrstufigem Betrieb, das durch den wenigstens einen zweiten Arbeitsraum verdichtete Fluid aufzunehmen und anschließend dem wenigstens einen ersten Arbeitsraum zuzuführen.

Mit anderen Worten ausgedrückt wird das gasförmige oder flüssige Fluid, das durch den wenigstens einen zweiten Arbeitsraum vorverdichtet worden ist, in einer Überströmkammer, die hier als Mittelraum bezeichnet ist, abgelegt. Dieser Mittelraum kann als ein in dem Antriebsteil innenliegender Raum ausgebildet sein. Das vorverdichtete Medium kann aus dem Mittelraum dem wenigstens einen ersten Arbeitsraum zur weiteren Verdichtung zugeführt werden. Durch den wenigstens einen ersten Arbeitsraum wird das vorverdichtete Medium auf seinen endgültigen Druck verdichtet und entnommen.

In einem weiteren Ausführungsbeispiel sind der Rotor und/oder Stator rotationssymmetrisch ausgebildet.

In einem weiteren Ausführungsbeispiel der Erfindung weist der Stator eine symmetrisch zu der ersten Mittelachse verlaufende Durchgangsöffnung auf und der Rotor weist symmetrisch zu seiner ersten Drehachse eine zweite Durchgangsöffnung auf, wobei die erste Durchgangsöffnung mit der zweiten Durchgangsöffnung, unabhängig von der Stellung des Rotors gegenüber dem Stator, miteinander fluidkommunizierend verbunden ist.

Somit kann ein zu verdichtendes Fluid durch den Stator und den Rotor hindurch bis zur Gleitfläche geleitet werden, um dort im wenigstens einen ersten und/oder dem wenigstens einen zweiten Arbeitsraum zugeführt zu werden.

Natürlich kann die Durchströmungsrichtung des Fluids umgekehrt werden, so dass der Eintritt des Fluids zum Austritt des Fluids wird und umgekehrt.

Es wird angemerkt, dass Gedanken zu der Erfindung hierin im Zusammenhang mit einer Drehkolbenmaschine mit einem Rotor und einem Stator beschrieben sind. Einem Fachmann ist hierbei klar, dass die einzelnen beschriebenen Merkmale auf verschiedene Weise miteinander kombiniert werden können, um so auch zu anderen Ausgestaltungen der Erfindung zu gelangen. Ausführungsformen der Erfindung werden nachfolgend mit Bezug auf die beigefügten Figuren beschrieben. Die Figuren sind lediglich schematisch und nicht maßstabsgetreu.

Kurze Beschreibung der Zeichnungen:
- Fig. 1: zeigt im Längsschnitt eine mehrflutige Drehkolbenmaschine,
- Fig. 2: zeigt in einer Explosionszeichnung einer Rotor-Stator-Antriebsteil-Anordnung mit Gleitlager und Steuering,
- Fig. 3: zeigt im Längsschnitt die Komponenten aus Fig. 2,
- Fig. 4A - D: zeigen im Längsschnitt die Funktionsweise des Steuerrings,
- Fig. 5: zeigt im Längsschnitt eine mehrstufige Drehkolbenmaschine,
- Fig. 6: zeigt in einer Explosionszeichnung die Rotor-Stator-Antriebsteil-Anordnung aus Fig. 5,
- Fig. 7: zeigt in einer weiteren Explosionszeichnung die Rotor-Stator-Antriebsteil-Anordnung aus Fig. 6 und
- Fig. 8A - C: zeigen ein Antriebsteil in unterschiedlichen Darstellungen.

### Detaillierte Beschreibung beispielhafter Ausführungsformen

An dieser Stelle soll vorausgeschickt werden, dass gleiche Teile in den einzelnen Figuren gleiche Bezugszeichen aufweisen.

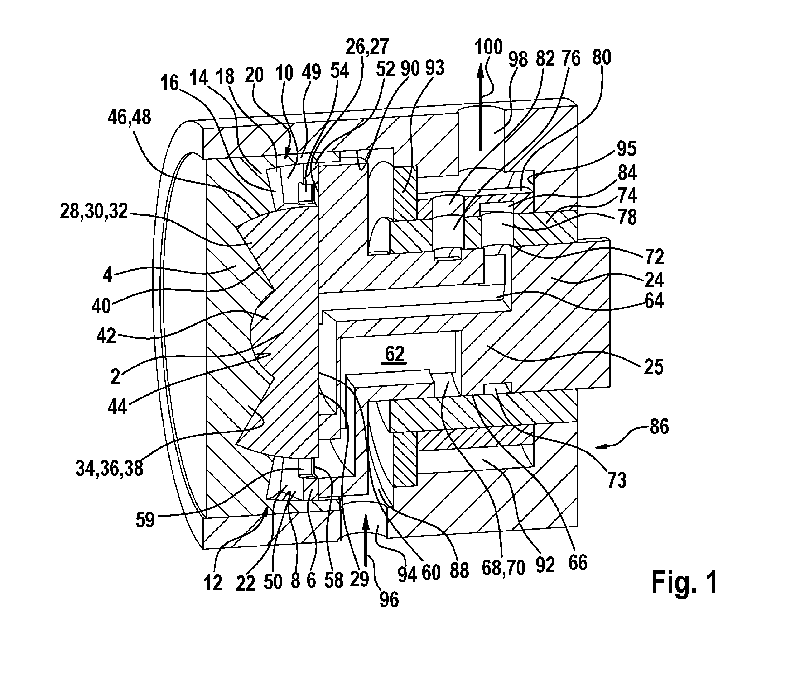

Fig. 1 zeigt eine Drehkolbenmaschine, die als Pumpe, Verdichter oder Motor arbeitet, im Längsschnitt dargestellt. Hierbei ist einem Rotor 2 ein Stator 4 gegenüberliegend angeordnet. Der Rotor 2 besitzt eine erste Stirnfläche 6 mit einer ersten Verzahnung 8, wobei die erste Verzahnung 8 aus wenigstens einem ersten Zahn 10 und wenigstens einer ersten Zahnlücke 12 gebildet ist. Der Stator 4 besitzt eine zweite Stirnfläche 14 mit einer zweiten Verzahnung 16, wobei die zweite Verzahnung 16 aus mindestens einem zweiten Zahn 18 sowie einer zweiten Zahnlücke 20 gebildet ist. Die beiden Verzahnungen 8, 16 stehen derart miteinander in Eingriff, dass durch Kämmen der ersten Zähne 10 der ersten Verzahnung 8 und der zweiten Zähne 18 der zweiten Verzahnung 16 erste Arbeitsräume 22 ausgebildet werden, wobei durch die ersten Arbeitsräume 22 gebildete Volumina durch das Kämmen der Zähne 10, 18 verändert werden.

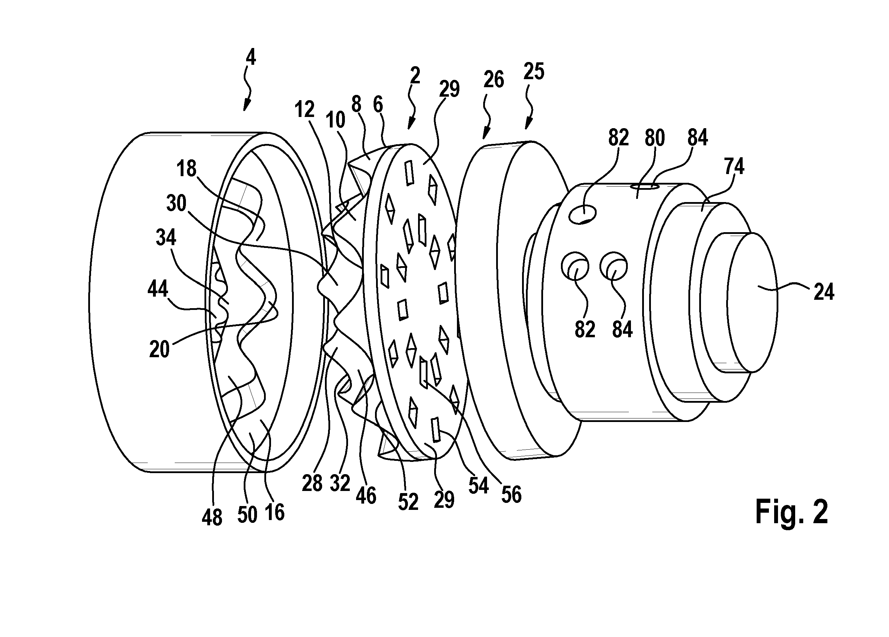

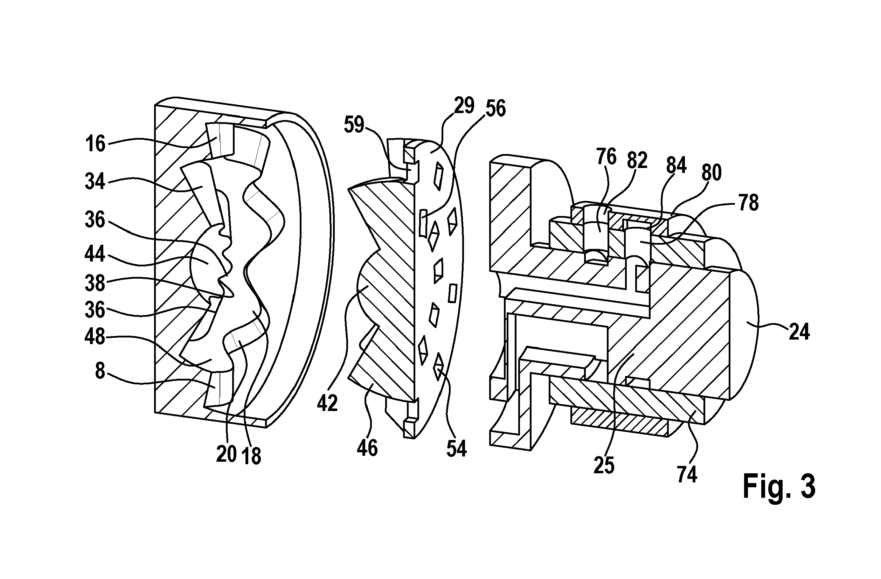

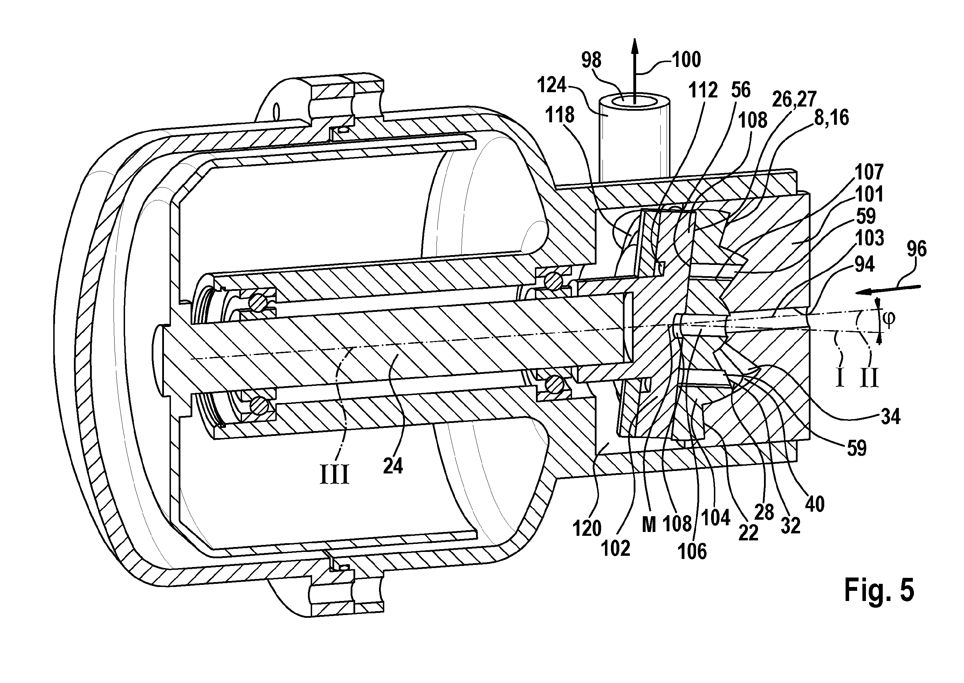

Besser ersichtlich in Fig. 5 besitzt der Rotor eine erste Drehachse I und der Stator 4 eine erste Mittelachse II. Die erste Drehachse I und die erste Mittelachse II schließen einen Winkel ϕ ein, der ungleich 0° ist. Auch ersichtlich in Figur 5 ist, dass eine den Rotor 2 antreibende Antriebswelle 24 eine zweite Drehachse III aufweist, um die die Antriebswelle 24 rotiert. Hierbei fällt die zweite Drehachse III mir der ersten Mittelachse II zusammen. In Figur 1 ist ersichtlich, dass zwischen dem Rotor 2 und der Antriebswelle 24 ein Antriebsteil 25 angeordnet ist, welches mit der Antriebswelle 24 in dem hier vorliegenden Ausführungsbeispiel einstückig ausgebildet ist. Das Antriebsteil 25 bildet an seiner dritten Stirnfläche 27 eine Gleitebene 26 aus, wobei die Gleitebene 26 eine der ersten Stirnfläche 6 gegenüberliegende vierte Stirnfläche 29 des Rotors 2 berührt. Hierbei ist die Gleitebene 26 um den Winkel ϕ gegenüber der Mittelachse II des Stators 4 geneigt. Oder anders ausgedrückt steht die Gleitebene 26 senkrecht auf die erste Drehachse I des Rotors 2. Ein Rotieren der Antriebswelle 24 führt zu einem Taumeln des Rotors 2, wobei sich der Rotor 2 relativ zu der Antriebswelle 24 dreht. In der Regel führt eine volle Umdrehung der Antriebswelle 24 dazu, dass sich der Rotor lediglich um einen Zahn weiter dreht. Die erste Stirnfläche 6 des Rotors 2 besitzt eine von der ersten Verzahnung 8 mittels einer ersten kugelringförmigen Stufe 46 räumlich getrennte dritte Verzahnung 28 auf, wobei die dritte Verzahnung 28 aus wenigstens einem dritten Zahn 30 und einer dritten Zahnlücke 32 gebildet ist. Die zweite Stirnfläche 14 des Stators 4 besitzt eine von der zweiten Verzahnung 16 mittels einer zweiten kugelringförmigen Stufe 48 räumlich getrennte vierte Verzahnung 34, wobei die vierte Verzahnung 34 aus wenigstens einem vierten Zahn 36 sowie wenigstens einer vierten Zahnlücke 38 gebildet ist. Die dritte 28 und vierte Verzahnung 34 stehen miteinander derart in Eingriff, dass durch ein Kämmen der dritten Zähne 30 der dritten Verzahnung 28 und der vierten Zähne 36 der vierten Verzahnung 34 zweite Arbeitsräume 40 ausgebildet werden, wobei durch die zweiten Arbeitsräume 40 gebildete Volumina durch das Kämmen der Zähne 30, 36 verändert werden. Hierbei ist die erste kugeiringförmige Stufe 46 des Rotors 2 komplementär zu der zweiten kugelringförmigen Stufe 48 des Stators 4 ausgebildet. Während des Betriebes berühren sich diese beiden Stufen 46, 48 oder sind vorbestimmt voneinander beabstandet. Die Höhe der Stufen 46, 48 ist derart gewählt, dass der wenigstens eine erste Arbeitsraum 22 von dem wenigstens einen zweiten Arbeitsraum 40 fluiddicht getrennt ist. Ferner besitzt der Rotor 2 in seinem Zentrum eine Kugelkappe 42, die in eine in dem Stator 4 komplementär ausgebildete Stützfläche 44 greift. Auch hier berühren sich die Kugelkappe 42 und die Stützfläche 44 oder sind vorbestimmt voneinander beabstandet. Ferner besitzt der Stator 4 eine Wandung 49, die an ihrer Innenwandung 50 kugelringförmig ausgebildet ist. Diese kugelringförmige Innenwandung 50 des Stators 4 ist komplementär zu einer kugelringförmigen Außenkontur 52 des Rotors 2 ausgebildet. Auch hier berühren sich die kugelringförmige Innenwandung 50 und die kugelringförmige Außenkontur 52 oder sind vorbestimmt voneinander beabstandet. Die einzelnen Durchmesser der jeweiligen kugelringförmigen Ausgestaltungen des Stators 4 und des Rotors 2 treffen sich in einem gemeinsamen Mittelpunkt M, der zugleich einen Schnittpunkt der ersten Drehachse I und der ersten Mittelachse II darstellt, wie dies insbesondere in Figur 5 ersichtlich ist. Sowohl der Stator 4 als auch der Rotor 2 sind rotationssymmetrisch ausgebildet. Der Rotor 2 weist an seiner vierten Stirnfläche 29 erste 54 und zweite Steueröffnungen 56 auf, wobei die Steueröffnungen 54, 56 besser in Figur 2 und 3 sichtbar sind. Hierbei sind die zweite Steueröffnung 54 mit dem ersten Arbeitsraum 22 und die dritte Steueröffnung 56 mit dem zweiten Arbeitsraum 40 fluidkommunizierend verbunden. Hierzu weisen der erste Arbeitsraum 22 und der zweite Arbeitsraum 40 Öffnungen 59 auf, die vorzugsweise in der ersten Zahnlücke 12 oder der dritten Zahnlücke 32 angeordnet sind, jedoch auch in der Zahnflanke ausgebildet sein können.

Die kugelringförmige Innenwandung 50 des Stators 4 umschließt die kugelringförmige Außenkontur 52 des Rotors 2 derart, dass der Rotor 2 in dem Stator 4 drehbar gelagert ist.

Die dritte Stirnfläche 27 des Antriebsteils 25 weist eine erste 58 und zweite Austrittssteueröffnung 60 auf. Hierbei ist die erste Austrittssteueröffnung 58 derart angeordnet, dass sie ein die erste Steueröffnung 54 verlassendes Fluid aufnehmen kann. Die zweite Steueröffnung 60 ist derart angeordnet, dass sie ein den zweiten Arbeitsraum 40 über die zweite Steueröffnung 56 verlassendes Fluid aufnehmen kann. Ferner besitzt das Antriebsteil 25 eine als gerader Kreiszylinder ausgeformte Außenwandung 66. In dieser Außenwandung 66 befinden sind eine dritte 68 und eine vierte Steueröffnung 72. Hierbei ist die dritte Steueröffnung 68 fluidkommunizierend mittels eines ersten innenliegenden Kanals 62 mit der ersten Steueröffnung 54 verbunden. Die vierte Steueröffnung 72 ist mittels eines zweiten innenliegenden Kanals 64 fluidkommunizierend mit der zweiten Steueröffnung 56 verbunden. Die dritte Steueröffnung 68 ist mit einer erste um die Außenwandung 66 umlaufende erste Ringnut 70 fluidkommunizierend verbunden. Die vierte Steueröffnung 72 ist ebenfalls mit einer um die Außenwandung 66 umlaufende zweite Ringnut 73 fluidkommunizierend verbunden. Die Außenwandung 66 des Antriebsteils 25 wird durch ein Gleitlager 74 aufgenommen, wobei das Gleitlager 74 eine erste 76 mit der ersten Ringnut 70 fluidkommunizierende und eine zweite, mit der zweiten Ringnut 73 fluidkommunizierende Gleitlagerbohrung 78 aufweist. Diese Gleitlagerbohrungen 76, 78 sind senkrechtstehend auf eine zweite Mittelachse des Gleitlagers 74 ausgebildet, wobei die zweite Mittelachse mit der zweiten Drehachse III zusammenfällt. Das Gleitlager 74 wird von einem Steuerring 80 umschlossen, wobei der Steuerring 80 eine erste Steuerringbohrung 82 besitzt, die derart positioniert ist, dass sie mit der ersten Gleitlagerbohrung 76 fluidkommunizieren kann. Weiterhin besitzt der Steuerring 80 eine zweite Steuerringbohrung 84, die mit der zweiten Gleitlagerbohrung 78 fluidkommunizieren kann. An dieser Stelle soll angemerkt werden, dass der Steuerring gegenüber dem Gleitlager 74 drehbar ist. Der Stator 4, der Rotor 2, das Antriebsteil 25 mit der Antriebswelle 24, das Gleitlager 74 sowie der Steuerring 80 sind von einem einstückigen Gehäuse 86 umgeben. Der Steuerring 80 befindet sich in einem zweiten Innenraum 92, der von einem ersten Innenraum 88 durch ein Schott 93 fluiddicht getrennt ist. Der Steuerring 80 ist zwischen einer zweiten Gehäuseinnenwandung 95 sowie dem Schott 93 derart geführt, dass der Steuerring 80 in axialer Richtung entlang der Mittelachse II nicht verschiebbar ist. Der erste Innenraum 88 wird somit zum einen durch das Schott 93 und zum anderen durch den Stator 2 begrenzt, wobei der Stator mit einer Innenwandung 90 des Gehäuses 86 ortsfest verbunden ist.

Ein zu verdichtendes Fluid tritt durch eine erste Eintrittsöffnung 94 entlang des ersten Pfeils 96 in den ersten Innenraum 88 ein. Dort wird mittels der ersten Steueröffnung 54 ein erster Volumenstrom dem Fluid entnommen, der dem ersten sich öffnenden Arbeitsraum 22 zugeführt wird. Dem in dem ersten Innenraum 88 befindlichen Fluid wird ein zweiter Volumenstrom mittels der zweiten Steueröffnungen 56 entnommen, der dem zweiten sich öffnenden Arbeitsraum 40 zugeführt wird. Durch ein Taumeln sowie einer Drehbewegung des Rotors 2 gegenüber dem Stator 4 wird das sich sowohl in den ersten 22 und zweiten Arbeitsräumen 40 befindliche Fluid durch die sich schließenden Arbeitsräume verdichtet. Aus dem ersten Arbeitsraum 22 gelangt der erste verdichtete Volumenstrom über die wenigstens erste Steueröffnungen 54 und der ersten Austrittssteueröffnung 58 in den ersten innenliegenden Kanal 62 und von dort über die dritte Steueröffnung 68 in die erste Ringnut 70. Von der ersten Ringnut 70 gelangt der erste Volumenstrom durch die erste Gleitlagerbohrung 76 und die erste Steuerringbohrung 82 in den zweiten Innenraum 92 und von dort entlang eines zweiten Pfeils 100 über eine Austrittsöffnung 98 aus der Drehkolbenmaschine heraus. Der zweite verdichtete Volumenstrom wird mittels der wenigstens einen zweiten Steueröffnung 56 dem zweiten Arbeitsraum 40 entnommen und über die zweite Austrittssteueröffnung 60 dem zweiten innenliegenden Kanal 64 und von dort über die vierte Steueröffnung 72 der zweiten Ringnut 73 zugeführt. Von der Ringnut 73 gelangt der zweite Volumenstrom durch die zweite Gleitlagerbohrung 78 hindurch bis zur zweiten verschlossenen Steuerringbohrung 84. Somit verlässt lediglich der erste Volumenstrom die Drehkolbenmaschine. Von der verschlossenen zweiten Steuerringbohrung 84 führt ein hier nicht sichtbarer Kanal zu dem ersten Innenraum 88, damit ein eventueller, sich rückstauender zweiter Volumenstrom nicht zu einem erschwerten Taumeln und Drehen des Rotors 2 führt.

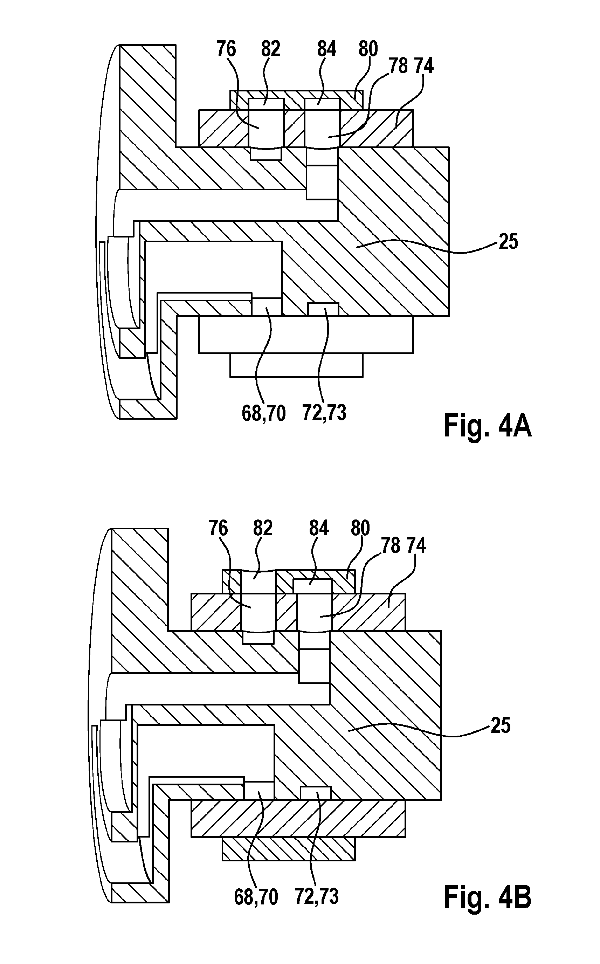

In Fig. 2 ist ersichtlich, dass die vierte Stirnfläche 29 des Rotors 2, die der Gleitebene 26 zugewandt ist, plan ausgeführt ist. Ferner ist ersichtlich, dass der Rotor 2 sowohl in der ersten Verzahnung 8 als auch in der dritten Verzahnung 28 jeweils zehn Zähne, 10, 30 und zehn Zahnlücken 12, 32 besitzt. Hierbei ist jede erste Zahnlücke 12 mit einer ersten Steueröffnung 54 sowie jede dritte Zahnlücke 32 mit einer zweiten Steueröffnung 56 mittels der besser in Fig. 3 sichtbaren Öffnungen 59 verbunden. Somit gibt es in diesem Ausführungsbeispiel zehn erste Steueröffnungen 54 und zehn zweite Steueröffnungen 56, wobei sowohl die ersten Steueröffnungen 54 als auch die zweiten Steueröffnungen 56 gleichmäßig über dem Umfang verteilt sind. Weiterhin ist ersichtlich, dass der Steuerring 80 an bestimmten Positionen erste Steuerringbohrungen 82 und zweite Steuerringbohrungen 84 besitzt. Die Funktionsweise des Steuerrings wird in den Fig. 4a bis 4d erklärt.

Fig. 3 zeigt die Komponenten aus Fig. 2 im Längsschnitt. Besonders gut ersichtlich sind hier die in dem Stator 4 ausgebildete zweite Verzahnung 16 mit dem zweiten Zahn 18 und der zweiten Zahnlücke 20 sowie die vierte Verzahnung 34 mit dem vierten Zahn 36 und der vierten Zahnlücke 38. Außerdem gut ersichtlich ist die Stützfläche 44, welche komplementär zu der Kugelkappe 42 des Rotors 2 ausgebildet ist. Das Antriebsteil 25 mit Gleitlager 74 und Steuerring 80 ist bereits aus Fig. 1 bekannt.

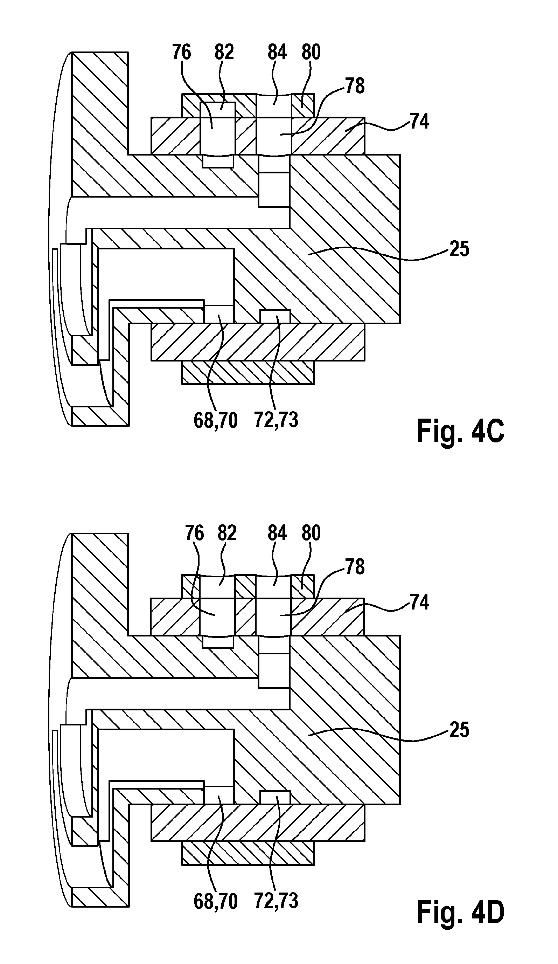

Fig. 4 zeigt das aus Fig. 1 bekannte Antriebsteil 25, wobei ein erster Volumenstrom über die erste Ringnut 70 durch die erste Gleitlagerbohrung 76 dem Steuerring 80 zugeführt ist. Der zweite Volumenstrom wird über die zweite Ringnut 73 durch die Gleitlagerbohrung 78 ebenfalls dem Steuerring 80 zugeführt. Hierbei ist der erste Volumenstrom von dem zweiten Volumenstrom unterschiedlich. Insbesondere kann der erste Volumenstrom einen anderen Druck aufweisen wie der zweite Volumenstrom. Es soll an dieser Stelle erwähnt werden, dass, wenn eine Steuerringbohrung 82, 84 verschlossen ist, der an der verschlossenen Steuerringbohrung anstehende Volumenstrom dem ersten Innenraum 88 zugeführt wird, damit ein sich rückstauender Volumenstrom nicht zu einem erhöhten Leistungsbedarf der Drehkolbenmaschine führt.

In der Fig. 4A werden mittels des Steuerringes 80 beide Gleitringbohrungen 76, 78 verschlossen. Somit fördert die Drehkolbenmaschine trotz sich drehenden Antriebsteils 25 keinen Volumenstrom.

Fig. 4B zeigt, dass der Steuerring 80 derart positioniert ist, dass lediglich der erste Volumenstrom über die erste Steuerringbohrung 82 die Drehkolbenmaschine verlassen kann und der zweite Volumenstrom an der fluiddicht verschlossenen zweiten Steuerringbohrung 84 ansteht.

In Fig. 4C ist der Steuerring 80 derart positioniert, dass lediglich der zweite Volumenstrom über die zweite Steuerringbohrung 84 die Drehkolbenmaschine verlassen kann und der erste Volumenstrom an der fluiddicht verschlossenen ersten Steuerringbohrung 82 ansteht.

In der Fig. 4D ist der Steuerring 80 derart positioniert, dass sowohl der erste Volumenstrom über die erste Steuerringbohrung 82 als auch der zweite Volumenstrom über die zweite Steuerringbohrung 84 die Drehkolbenmaschine verlassen kann.

Somit kann bei konstanter Drehzahl des Antriebsteils 25 durch entsprechende Positionierung des Steuerrings 80 entweder kein Volumenstrom, nur der erste Volumenstrom, nur der zweite Volumenstrom oder beide Volumenströme gemeinsam die Drehkolbenmaschine verlassen.

Bei der in Fig. 5 im Längsschnitt dargestellten Drehkolbenmaschine handelt es sich um einen mehrstufigen Verdichter. Hier sollen nur die Unterschiede gegenüber der aus Fig. 1 bekannten Drehkolbenmaschine dargestellt werden. Der bereits aus Fig. 1 bekannte Stator 4 unterscheidet sich von dem in Fig. 5 dargestellten Stator 101 dadurch, dass der Stator 101 konzentrisch zu seiner ersten Mittelachse II eine erste Bohrung 103 aufweist, die gleichzeitig als Eintrittsöffnung 94 für ein zu verdichtendes Fluid ausgestaltet ist. Der Rotor 104 aus Fig. 5 unterscheidet sich von dem aus dem Fig. 1 bereits bekannten Rotor 4 lediglich dadurch, dass der Rotor 104 konzentrisch zu seiner ersten Drehachse I eine zweite Bohrung 106 aufweist, durch die das zu verdichtende Fluid einem gegenüber der Fig. 1 neu gestalteten Arbeitsteil 102 zugeführt wird. Weiterhin sichtbar ist ein die wenigstens eine zweite Steueröffnung 56 mit der wenigstens einen dritten Zahnlücke 32 fluidkommunizierend verbindender dritter in dem Rotor 104 innenliegender Kanal 107, der an der Öffnung 59 endet. Das Antriebsteil 102 ist drehfest mit der Antriebswelle 24 verbunden. Es soll erwähnt werden, dass die zweite Bohrung 106 in jeder Stellung des Rotors 104 mit der ersten Bohrung 103 im Stator 101 fluidkommunizierend verbunden ist.

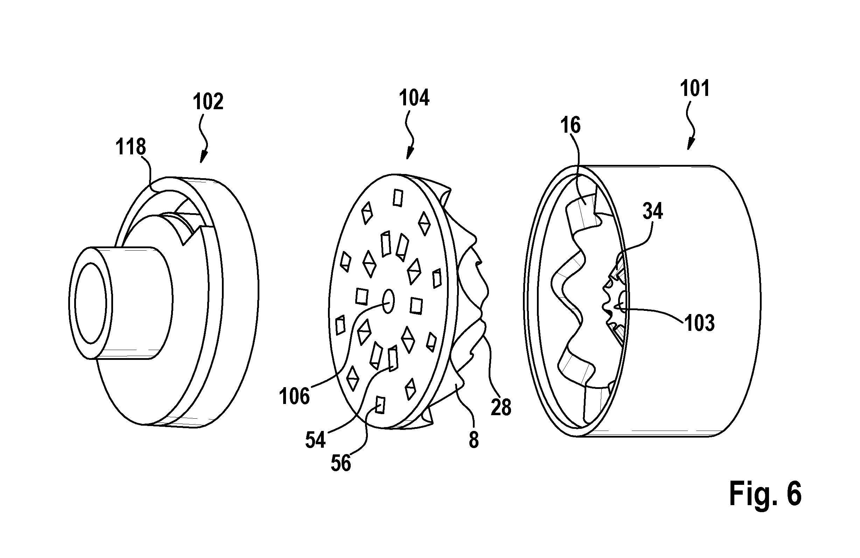

Fig. 6 zeigt den Stator 101, den Rotor 104 sowie das Antriebsteil 102 als Explosionszeichnung dargestellt. Deutlich sichtbar ist die als Durchgangsbohrung gestaltete zweite Bohrung 106.

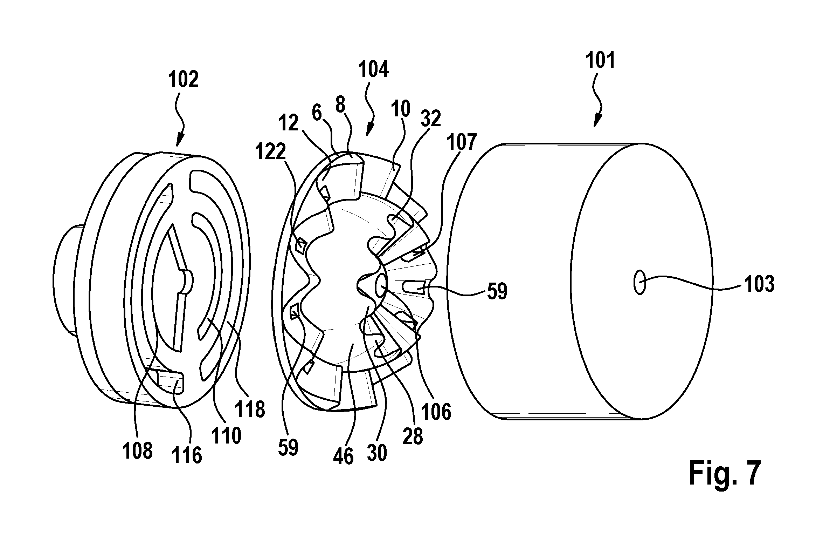

In Fig. 7 sind die Komponenten aus Fig. 6 aus einer anderen Perspektive dargestellt. Deutlich sichtbar ist hier die im Stator 101 zur ersten Mittelachse II konzentrisch angebrachte, als Durchgangsbohrung gestaltete erste Bohrung 103. Der Rotor 104 besitzt dritte innenliegende Kanäle 107, die die zweiten Steueröffnungen 56 mit den dritten Zahnlücken 32 fluidkommunizierend verbinden. Weiterhin sind vierte innenliegende Kanäle 122 ersichtlich, die die ersten Steueröffnungen 54 mit den ersten Zahnlücken 12 fluidkommunizierend verbinden.

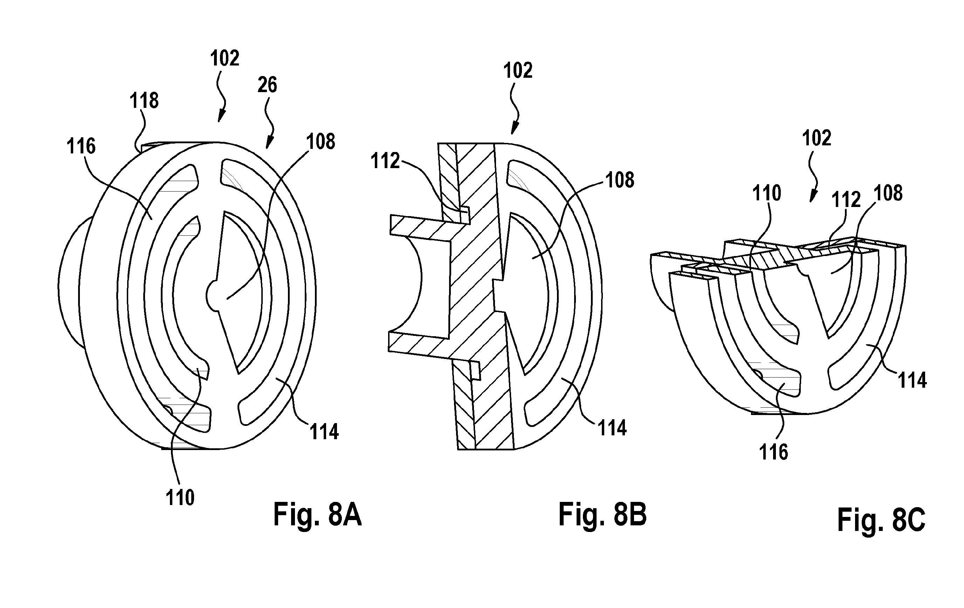

Fig. 8 zeigt das Antriebsteil 102 mit Blick auf die Gleitfläche 26 dargestellt ist. Fig. 8B zeigt in der Perspektive der Fig. 8A das Antriebsteil 102 in einem bereits aus Fig. 5 bekannten vertikalen Längsschnitt. Fig. 8C zeigt das Antriebsteil 102 in der Perspektive der Fig. 8A, wobei das Antriebsteil 102 gegenüber der Darstellung in Fig. 8B nun horizontal längsgeschnitten ist.

Die Funktionsweise des mehrstufigen Verdichters soll anhand der Darstellungen der Fig. 5, 6, 7 und 8 erfolgen. Ein zu verdichtendes Fluid gelangt entlang des Pfeils 96 durch die Eintrittsöffnung 94 mittels der ersten Bohrung 103 durch den Stator 101 hindurch. Anschließend tritt das Fluid durch die zweite Bohrung 106 durch den Rotor 104 hindurch und gelangt zu einer fünften Steueröffnung 108 in dem Antriebsteil 102. Von dieser fünften Steueröffnung 108 wird das Fluid durch die zweiten Steueröffnungen 56 mittels der dritten innenliegenden Kanäle 107 den zweiten sich öffnenden Arbeitsräumen 40 zugeführt. Das Fluid wird mittels der sich schließenden zweiten Arbeitsräume 40 verdichtet und über die dritten innenliegenden Kanäle 107 und den zugehörigen zweiten Steueröffnungen 56 einer sechsten Steueröffnung 110 zugeführt. Das vorverdichtete Fluid gelangt von der sechsten Steueröffnung 110 in einen Mittelraum 112 und wird von dort einer siebten Steueröffnung 114 zugeführt. Das vorverdichtete Fluid wird der siebten Steueröffnung 114 entnommen und über die ersten Steueröffnungen 54 mittels vierter innenliegender Kanäle 122 den sich öffnenden ersten Arbeitsräumen 22 zugeführt. Das vorverdichtete Medium wird durch sich schließende erste Arbeitsräume 22 auf seinen Enddruck gebracht und gelangt aus den ersten Arbeitsräumen 22 durch die vierten innenliegenden Kanäle 122 zu den zweiten Steueröffnungen 54. Von dort gelangt das endverdichtete Fluid mittels einer achten Steueröffnung 116 durch das Antriebsteil 102 hindurch zu einer neunten Steueröffnung 118. Von dort gelangt das endverdichtete Fluid in einen dritten Innenraum 120 und wird von dort mittels eines Stutzens 124 entlang des Pfeiles 100 durch die Austrittsöffnung 98 aus der Drehkolbenmaschine abgeführt.

## Patentansprüche

1. Drehkolbenmaschine, die als Pumpe, Verdichter oder Motor arbeitet,
- mit einem Rotor (2, 104) und einem Stator (4, 101), wobei der Stator (4, 101) dem Rotor (2, 104) gegenüberliegend angeordnet ist,
- wobei der Rotor (2, 104) eine erste Stirnfläche (6) mit einer ersten Verzahnung (8) aufweist, wobei der Stator (4) eine zweite Stirnfläche (14) mit einer zweiten Verzahnung (16) aufweist und wobei die erste (8) und die zweite Verzahnung (16) je aus zumindest einem Zahn (10, 18) und einer Zahnlücke (12, 20) gebildet sind,
- wobei der Stator (4, 101) gegenüber dem Rotor (2, 104) ortsfest angeordnet ist,
- wobei die Verzahnungen (8, 16) miteinander derart in Eingriff stehen, dass durch ein Kämmen der Zähne (10) der ersten Verzahnung (8) und der Zähne (18) der zweiten Verzahnung (16) erste Arbeitsräume (22) ausgebildet werden, wobei durch die ersten Arbeitsräume (22) gebildete Volumina durch das Kämmen der Zähne (10, 18) verändert werden,
- wobei der Rotor (2, 104) eine erste Drehachse (I) aufweist, wobei der Stator (4, 101) eine erste Mittelachse (II) aufweist, wobei die erste Drehachse (I) und die erste Mittelachse (II) einen Winkel (ϕ) einschließen, der ungleich 0° ist,
- wobei der Rotor (2, 104) durch eine Antriebswelle (24) mit einer Gleitebene (26) angetrieben ist, wobei die Gleitebene (26) senkrecht auf die erste Drehachse (I) steht, so dass ein Rotieren der Antriebswelle (24) zu einem Taumeln des Rotors (2, 104) gegenüber dem Stator (4, 101) bzw. ein Taumeln des Rotors (2, 104) zu einem Drehen der Antriebswelle (24) führt,
**dadurch gekennzeichnet, dass**
- die erste Stirnfläche (6) des Rotors (2, 104) eine von der ersten Verzahnung (8) räumlich getrennte dritte Verzahnung (28) aufweist und die zweite Stirnfläche (14) des Stators (4, 101) eine von der zweiten Verzahnung (16) räumlich getrennte vierte Verzahnung (34) aufweist, wobei die dritte (28) und die vierte Verzahnung (34) je aus mindestens einem Zahn (30, 36) und einer Zahnlücke (32, 38) gebildet sind, wobei die dritte (28) und vierte Verzahnung (34) miteinander derart in Eingriff stehen, dass durch ein Kämmen der Zähne (30) der dritten Verzahnung (28) und der Zähne (36) der vierten Verzahnung (34) wenigstens ein zweiter Arbeitsraum (40) ausgebildet wird, wobei ein durch den wenigstens einen zweiten Arbeitsraum (40) gebildetes Volumen durch das Kämmen der Zähne (30,36) verändert wird.

2. Drehkolbenmaschine nach Anspruch 1, **dadurch gekennzeichnet,**
- **dass** quer zur ersten Stirnfläche (6) gesehen die erste Verzahnung (8) und die dritte Verzahnung (28) durch eine erste Stufe (46) beabstandet sind,
- **dass** quer zur zweiten Stirnfläche (14) gesehen die zweite Verzahnung (16) und die vierte Verzahnung (34) durch eine zweite Stufe (48) beabstandet sind,
- **dass** die erste Stufe (46) komplementär zu der zweiten Stufe (48) derart gestaltet ist, dass der wenigstens eine erste Arbeitsraum (22) und der wenigstens eine zweite Arbeitsraum (40) derart voneinander räumlich getrennt sind, dass die Drehkolbenmaschine mehrstufig oder mehrflutig betreibbar ist.

3. Drehkolbenmaschine nach Anspruch 1 oder 2, **dadurch gekennzeichnet, dass** der Stator (4, 101) eine kugelringförmige Innenwandung (50) aufweist und der Rotor (2, 104) eine kugelringförmige Außenkontur (52) aufweist, wobei die kugelringförmige Innenwandung (50) komplementär zu der kugelringförmigen Außenkontur (52) ausgestaltet ist, derart, dass der Rotor (2, 104) in dem Stator (4, 101) drehbar geführt ist, wobei die erste (46) und die zweite Stufe (48) kugelringförmig ausgeformt sind, wobei der Rotor (2, 104) symmetrisch zu seiner Drehachse (I) eine Kugelkappe (42) aufweist und der Stator (4, 101) symmetrisch zu seiner Mittelachse (II) eine zu der der Kugelkappe (42) komplementär ausgeformte kugelförmige Stützfläche (44) aufweist, wobei ein erster Mittelpunkt der kugelringförmigen Außenkontur (52), ein zweiter Mittelpunkt der kugelringförmigen Innenwandung (50), ein dritter Mittelpunkt der ersten Stufe (46), ein vierter Mittelpunkt der zweiten Stufe (48), ein fünfter Mittelpunkt der Kugelkappe (42) und ein sechster Mittelpunkt der kugelförmigen Stützfläche (44) zu einem gemeinsamen Mittelpunkt (M) zusammenfallen, in dem sich die erste Mittelachse (II) und die erste Drehachse (I) kreuzen.

4. Drehkolbenmaschine nach einem der vorhergehenden Ansprüche, **dadurch gekennzeichnet, dass** die Antriebswelle (24) ein Antriebsteil (25, 102) aufweist, wobei eine dem Rotor (2, 104) zugewandte dritte Stirnfläche (27) des Antriebsteils (25, 102) als die Gleitfläche (26) ausgebildet ist, wobei die Gleitfläche (26) wenigstens eine erste Eintrittssteueröffnung (108, 114) und/oder wenigstens eine erste Austrittssteueröffnung (58, 60, 110, 116) aufweist, wobei ein zu verdichtendes Fluid mittels der wenigstens einen ersten Eintrittssteueröffnung (108, 114) dem wenigstens einen ersten Arbeitsraum (22) und/oder dem wenigstens einen zweiten Arbeitsraum (40) zuführbar und/oder ein verdichtetes Fluid mittels der wenigstens einen ersten Austrittssteueröffnung (58, 60, 110, 116) aus dem wenigstens einen ersten Arbeitsraum (22) und/oder aus dem wenigstens einen zweiten Arbeitsraum (40) abführbar ist.

5. Drehkolbenmaschine nach einem der vorhergehenden Ansprüche, **dadurch gekennzeichnet, dass** der Rotor (2, 104) eine der Gleitfläche (26) zugewandte vierte Stirnfläche (29) aufweist, wobei die vierte Stirnfläche (29) wenigstens eine erste (54) und wenigstens eine zweite Steueröffnung (56) aufweist, wobei die wenigstens eine erste Steueröffnung (54) mit dem wenigstens einen ersten Arbeitsraum (22) und die wenigstens eine zweite Steueröffnung (56) mit dem wenigstens einen zweiten Arbeitsraum (40) fluidkommunizierend verbunden ist.

6. Drehkolbenmaschine nach Anspruch 5, **dadurch gekennzeichnet, dass** aus dem wenigstens einen ersten Arbeitsraum (22) ein erster Volumenstrom und aus dem wenigstens einen zweiten Arbeitsraum (40) ein von dem ersten Volumenstrom unterschiedlicher zweiter Volumenstrom abführbar ist, wobei das Antriebsteil (25) eine Außenwandung (66) mit wenigstens einer dritten (68) und einer vierten Steueröffnung (72) aufweist, wobei mittels der dritten Steueröffnung (68) der erste Volumenstrom und mittels der vierten Steueröffnung (72) der zweite Volumenstrom einem die Außenwandung (66) umschließenden Steuerring (80) zuführbar ist, wobei durch den Steuerring (80) wenigstens eine der Steueröffnungen (68, 72) aus der Gruppe der dritten (68) und vierten Steueröffnung (72) fluiddicht verschließbar ist.

7. Drehkolbenmaschine nach Anspruch 6, **dadurch gekennzeichnet, dass** die dritte (68) und die vierte Steueröffnung (72) je als Ringnut (70, 73) in dem Antriebsteil (25) ausgebildet sind.

8. Drehkolbenmaschine nach Anspruch 6 oder 7, **dadurch gekennzeichnet, dass** zwischen dem Steuerring (80) und der Außenwandung (66) des Antriebsteils (25) ein Gleitlager (74) mit einer ersten (76) und einer zweiten Durchtrittsöffnung (78) angeordnet ist, wobei die erste Durchtrittsöffnung (76) mit der dritten Steueröffnung (68) und die zweite Durchtrittsöffnung (78) mit der vierten Steueröffnung (72) fluidkommunizierend verbunden ist, dass der Steuerring (80) an vorbestimmten Positionen eine dritte (82) und eine vierte Durchtrittsöffnung (84) aufweist, wobei die dritte Durchtrittsöffnung (82) mit der ersten Durchtrittsöffnung (76) und die vierte Durchtrittsöffnung (84) mit der zweiten Durchtrittsöffnung (78) fluidkommunizierend verbunden ist.

9. Drehkolbenmaschine nach einem der Ansprüche 6 bis 8, **dadurch gekennzeichnet, dass** mittels des Steuerrings (80) der an der dritten (82) und/oder vierten verschlossenen Durchtrittsöffnung (84) anstehende erste und/oder zweite Volumenstrom dem zu verdichtenden Fluid zuführbar ist.

10. Drehkolbenmaschine nach Anspruch 5, **dadurch gekennzeichnet, dass** das Antriebsteil (102) einen innenliegenden Mittenraum (112) aufweist, der derart eingerichtet ist, insbesondere beim mehrstufigen Betrieb das durch den wenigstens einen zweiten Arbeitsraum (40) verdichtete Fluid aufzunehmen und anschließend dem wenigstens einen ersten Arbeitsraum (22) zuzuführen.

## Claims

1. Rotary piston machine, which operates as a pump, compressor or motor,
- having a rotor (2, 104) and having a stator (4, 101), wherein the stator (4, 101) is arranged facing the rotor (2, 104),
- wherein the rotor (2, 104) has a first face surface (6) with a first toothing (8), wherein the stator (4) has a second face surface (14) with a second toothing (16), and wherein the first (8) and the second toothing (16) are each formed from at least one tooth (10, 18) and one tooth space (12, 20),
- wherein the stator (4, 101) is arranged so as to be positionally fixed relative to the rotor (2, 104),
- wherein the toothings (8, 16) engage with one another such that meshing of the teeth (10) of the first toothing (8) and of the teeth (18) of the second toothing (16) causes first working chambers (22) to be formed, wherein volumes formed by the first working chambers (22) are varied by the meshing of the teeth (10, 18),
- wherein the rotor (2, 104) has a first axis of rotation (I), wherein the stator (4, 101) has a first central axis (II), wherein the first axis of rotation (I) and the first central axis (II) enclose an angle (ϕ) that differs from 0°,
- wherein the rotor (2, 104) is driven by a drive shaft (24) with a slide plane (26), wherein the slide plane (26) is perpendicular to the first axis of rotation (I) such that a rotation of the drive shaft (24) leads to a wobbling movement of the rotor (2, 104) relative to the stator (4, 101), and/or a wobbling movement of the rotor (2, 104) leads to a rotation of the drive shaft (24), **characterized in that**
- the first face surface (6) of the rotor (2, 104) has a third toothing (28) which is spatially separate from the first toothing (8), and the second face surface (14) of the stator (4, 101) has a fourth toothing (34) which is spatially separate from the second toothing (16), wherein the third (28) and the fourth toothing (34) are each formed from at least one tooth (30, 36) and one tooth space (32, 38), wherein the third (28) and fourth toothing (34) engage with one another such that meshing of the teeth (30) of the third toothing (28) and of the teeth (36) of the fourth toothing (34) causes at least one second working chamber (40) to be formed, wherein a volume formed by the at least one second working chamber (40) is varied by the meshing of the teeth (30, 36).

2. Rotary piston machine according to Claim 1, **characterized**
- **in that**, as viewed perpendicular to the first face surface (6), the first toothing (8) and the third toothing (28) are spaced apart by a first step (46),
- **in that**, as viewed perpendicular to the second face surface (14), the second toothing (16) and the fourth toothing (34) are spaced apart by a second step (48),
- **in that** the first step (46) is designed complementarily to the second step (48) such that the at least one first working chamber (22) and the at least one second working chamber (40) are spatially separated from one another such that the rotary piston machine can be operated in multi-stage or multichannel configuration.

3. Rotary piston machine according to Claim 1 or 2, **characterized in that** the stator (4, 101) has a spherical ring-shaped internal wall (50), and the rotor (2, 104) has a spherical ring-shaped external contour (52), wherein the spherical ring-shaped internal wall (50) is designed complementarily to the spherical ring-shaped external contour (52), such that the rotor (2, 104) is guided rotatably in the stator (4, 101), wherein the first (46) and the second step (48) are of spherical ring-shaped form, wherein the rotor (2, 104) has, symmetrically with respect to its axis of rotation (I), a spherical cap (42), and the stator (4, 101) has, symmetrically with respect to its central axis (II), a spherical support surface (44) of a form complementary to the spherical cap (42), wherein a first central point of the spherical ring-shaped external contour (52), a second central point of the spherical ring-shaped internal wall (50), a third central point of the first step (46), a fourth central point of the second step (48), a fifth central point of the spherical cap (42) and a sixth central point of the spherical support surface (44) coincide to form a common central point (M) at which the first central axis (II) and the first axis of rotation (I) intersect.

4. Rotary piston machine according to one of the preceding claims, **characterized in that** the drive shaft (24) has a drive part (25, 102), wherein a third face surface (27), facing toward the rotor (2, 104), of the drive part (25, 102) is formed as the slide surface (26), wherein the slide surface (26) has at least one first inlet control opening (108, 114) and/or at least one first outlet control opening (58, 60, 110, 116), wherein a fluid for compression can be supplied to the at least one first working chamber (22) and/or to the at least one second working chamber (40) via the at least one first inlet control opening (108, 114), and/or a fluid for compression can be discharged from the at least one first working chamber (22) and/or from the at least one second working chamber (40) via the at least one first outlet control opening (58, 60, 110, 116).

5. Rotary piston machine according to one of the preceding claims, **characterized in that** the rotor (2, 104) has a fourth face surface (29) facing toward the slide surface (26), wherein the fourth face surface (29) has at least one first (54) and at least one second control opening (56), wherein the at least one first control opening (54) is connected in fluid communication to the at least one first working chamber (22) and the at least one second control opening (56) is connected in fluid communication to the at least one second working chamber (40).

6. Rotary piston machine according to Claim 5, **characterized in that** a first volume flow can be discharged from the at least one first working chamber (22) and a second volume flow that differs from the first volume flow can be discharged from the at least one second working chamber (40), wherein the drive part (25) has an external wall (66) with at least one third (68) and one fourth control opening (72), wherein the first volume flow can be supplied via the third control opening (68), and the second volume flow can be supplied via the fourth control opening (72) to a control ring (80) surrounding the external wall (66), wherein at least one of the control openings (68, 72) from the group of the third (68) and fourth control opening (72) can be closed in fluid-tight fashion by the control ring (80).

7. Rotary piston machine according to Claim 6, **characterized in that** the third (68) and the fourth control opening (72) are each in the form of an annular groove (70, 73) in the drive part (25).

8. Rotary piston machine according to Claim 6 or 7, **characterized in that** a plain bearing (74) with a first (76) and a second passage opening (78) is arranged between the control ring (80) and the external wall (66) of the drive part (25), wherein the first passage opening (76) is connected in fluid communication to the third control opening (68) and the second passage opening (78) is connected in fluid communication to the fourth control opening (72), **in that** the control ring (80) has, at predetermined positions, a third (82) and a fourth passage opening (84), wherein the third passage opening (82) is connected in fluid communication to the first passage opening (76) and the fourth passage opening (84) is connected in fluid communication to the second passage opening (78).

9. Rotary piston machine according to one of Claims 6 to 8, **characterized in that** the first and/or second volume flow present at the third (82) and/or fourth closed passage opening (84) can be supplied by way of the control ring (80) to the fluid for compression.

10. Rotary piston machine according to Claim 5, **characterized in that** the drive part (102) has a central chamber (112) which is situated at the inside and which is designed such that, in particular during multi-stage operation, it receives the fluid compressed by the at least one second working chamber (40) and subsequently supplies said fluid to the at least one first working chamber (22).

## Revendications

1. Machine à pistons rotatifs fonctionnant en tant que pompe, compresseur ou moteur,
- comprenant un rotor (2, 104) et un stator (4, 101), le stator (4, 101) étant disposé en regard du rotor (2, 104),
- le rotor (2, 104) présentant une première face frontale (6) avec une première denture (8), le stator (4) présentant une deuxième face frontale (14) avec une deuxième denture (16) et la première (8) et la deuxième (16) denture étant chacune réalisées à partir d'au moins une dent (10, 18) et d'un espace entre dents (12, 20),
- le stator (4, 101) étant disposé fixement par rapport au rotor (2, 104),
- les dentures (8, 16) étant en prise l'une avec l'autre de telle sorte que par un engrènement des dents (10) de la première denture (8) et des dents (18) de la deuxième denture (16), des premiers espaces de travail (22) soient réalisés, des volumes formés par les premiers espaces de travail (22) étant modifiés par l'engrènement des dents (10, 18),
- le rotor (2, 104) présentant un premier axe de rotation (I), le stator (4, 101) présentant un premier axe médian (II), le premier axe de rotation (I) et le premier axe médian (II) formant un angle (ϕ) qui est différent de 0°,
- le rotor (2, 104) étant entraîné par un arbre d'entraînement (24) avec un plan de glissement (26), le plan de glissement (26) étant perpendiculaire au premier axe de rotation (I) de sorte qu'une rotation de l'arbre d'entraînement (24) conduise à une oscillation du rotor (2, 104) par rapport au stator (4, 101) ou qu'une oscillation du rotor (2, 104) conduise à une rotation de l'arbre d'entraînement (24),
**caractérisée en ce que**
- la première face frontale (6) du rotor (2, 104) présente une troisième denture (28) séparée spatialement de la première denture (8) et la deuxième face frontale (14) du stator (4, 101) présente une quatrième denture (34) séparée spatialement de la deuxième denture (16),
la troisième (28) et la quatrième (34) denture étant chacune formées d'au moins une dent (30, 36) et d'un espace entre dents (32, 38), la troisième (28) et la quatrième (34) denture étant en prise l'une avec l'autre de telle sorte que par un engrènement des dents (30) de la troisième denture (28) et des dents (36) de la quatrième denture (34), au moins un deuxième espace de travail (40) soit réalisé, un volume formé par l'au moins un deuxième espace de travail (40) étant modifié par l'engrènement des dents (30, 36).

2. Machine à pistons rotatifs selon la revendication 1, **caractérisée en ce que**
- vu transversalement à la première face frontale (6), la première denture (8) et la troisième denture (28) sont espacées par un premier épaulement (46),
- vu transversalement à la deuxième face frontale (14), la deuxième denture (16) et la quatrième denture (34) sont espacées par un deuxième épaulement (48),
- le premier épaulement (46) est configuré de manière complémentaire au deuxième épaulement (48), de telle sorte que l'au moins un premier espace de travail (22) et l'au moins un deuxième espace de travail (40) soient séparés spatialement l'un de l'autre de telle sorte que la machine à pistons rotatifs puisse fonctionner avec plusieurs étages ou avec plusieurs flux.

3. Machine à pistons rotatifs selon la revendication 1 ou 2, **caractérisée en ce que** le stator (4, 101) présente une paroi interne de forme annulaire sphérique (50) et le rotor (2, 104) présente un contour extérieur de forme annulaire sphérique (52), la paroi interne de forme annulaire sphérique (50) étant configurée de manière complémentaire au contour extérieur de forme annulaire sphérique (52), de telle sorte que le rotor (2, 104) soit guidé de manière rotative dans le stator (4, 101), le premier (46) et le deuxième (48) épaulement étant formés sous forme annulaire sphérique, le rotor (2, 104) présentant, symétriquement par rapport à son axe de rotation (I), un capuchon sphérique (42) et le stator (4, 101) présentant, symétriquement par rapport à son axe médian (II), une surface de support sphérique (44) formée de manière complémentaire au capuchon sphérique (42), un premier centre du contour extérieur de forme annulaire sphérique (52), un deuxième centre de la paroi interne de forme annulaire sphérique (50), un troisième centre du premier épaulement (46), un quatrième centre du deuxième épaulement (48), un cinquième centre du capuchon sphérique (42) et un sixième centre de la surface de support sphérique (44) coïncidant en un centre commun (M) auquel se croisent le premier axe médian (II) et le premier axe de rotation (I).

4. Machine à pistons rotatifs selon l'une quelconque des revendications précédentes, **caractérisée en ce que** l'arbre d'entraînement (24) présente une partie d'entraînement (25, 102), une troisième face frontale (27) tournée vers le rotor (2, 104) de la partie d'entraînement (25, 102) étant réalisée sous forme de la surface de glissement (26), la surface de glissement (26) présentant au moins une première ouverture de commande d'entrée (108, 114) et/ou au moins une première ouverture de commande de sortie (58, 60, 110, 116), un fluide à comprimer pouvant être acheminé au moyen de l'au moins une première ouverture de commande d'entrée (108, 114) à l'au moins un premier espace de travail (22) et/ou à l'au moins un deuxième espace de travail (40) et/ou un fluide comprimé pouvant être évacué au moyen de l'au moins une première ouverture de commande de sortie (58, 60, 110, 116) hors de l'au moins un premier espace de travail (22) et/ou hors de l'au moins un deuxième espace de travail (40).

5. Machine à pistons rotatifs selon l'une quelconque des revendications précédentes, **caractérisée en ce que** le rotor (2, 104) présente une quatrième face frontale (29) tournée vers la surface de glissement (26), la quatrième face frontale (29) présentant au moins une première ouverture de commande (54) et au moins une deuxième ouverture de commande (56), l'au moins une première ouverture de commande (54) étant connectée par communication fluidique à l'au moins un premier espace de travail (22) et l'au moins une deuxième ouverture de commande (56) étant connectée par communication fluidique à l'au moins un deuxième espace de travail (40).

6. Machine à pistons rotatifs selon la revendication 5, **caractérisée en ce qu'**un premier flux volumique peut être évacué de l'au moins un premier espace de travail (22) et un deuxième flux volumique différent du premier flux volumique peut être évacué de l'au moins un deuxième espace de travail (40), la partie d'entraînement (25) présentant une paroi extérieure (66) avec au moins une troisième (68) et une quatrième (72) ouverture de commande, le premier flux volumique pouvant être acheminé au moyen de la troisième ouverture de commande (68) et le deuxième flux volumique pouvant être acheminé au moyen de la quatrième ouverture de commande (72) à une bague de commande (80) entourant la paroi extérieure (66), au moins l'une des ouvertures de commande (68, 72) appartenant au groupe de la troisième (68) et de la quatrième (72) ouverture de commande pouvant être fermée de manière étanche aux fluides par la bague de commande (80).

7. Machine à pistons rotatifs selon la revendication 6, **caractérisée en ce que** la troisième (68) et la quatrième (72) ouverture de commande sont chacune réalisées sous forme de rainure annulaire (70, 73) dans la partie d'entraînement (25).

8. Machine à pistons rotatifs selon la revendication 6 ou 7, **caractérisée en ce qu'**entre la bague de commande (80) et la paroi extérieure (66) de la partie d'entraînement (25) est disposé un palier lisse (74) avec une première (76) et une deuxième (78) ouverture de passage, la première ouverture de passage (76) étant connectée par communication fluidique à la troisième ouverture de commande (68) et la deuxième ouverture de passage (78) étant connectée par communication fluidique à la quatrième ouverture de commande (72), **en ce que** la bague de commande (80) présente, dans des positions prédéterminées, une troisième (82) et une quatrième (84) ouverture de passage, la troisième ouverture de passage (82) étant connectée par communication fluidique à la première ouverture de passage (76) et la quatrième ouverture de passage (84) étant connectée par communication fluidique à la deuxième ouverture de passage (78).

9. Machine à pistons rotatifs selon l'une quelconque des revendications 6 à 8, **caractérisée en ce qu'**au moyen de la bague de commande (80), le premier et/ou le deuxième flux volumique se produisant au niveau de la troisième (82) et/ou de la quatrième (84) ouverture de passage fermée peuvent être acheminés au fluide à comprimer.

10. Machine à pistons rotatifs selon la revendication 5, **caractérisée en ce que** la partie d'entraînement (102) présente un espace central interne (112) qui est prévu notamment lors du fonctionnement à plusieurs étages pour recevoir le fluide comprimé par l'au moins un deuxième espace de travail (40) et pour l'acheminer ensuite à l'au moins un premier espace de travail (22).
